# EUROPEAN PATENT APPLICATION

(11) **EP 2 623 470 A1**
(43) Date of publication of application: **07.08.2013**
(21) Application number: 11828766.3
(22) Date of filing: 12.09.2011
(51) Int. Cl.: C03C 27/12, C08J 5/12

(54) **PROCESS FOR PRODUCING LAMINATED GLASS**

(30) Priority: 27.09.2010 JP 2010215242
(71) Applicant: Bridgestone Corporation, Tokyo 104-8340 (JP)
(72) Inventor: IKEDA Tetsuro, Yokohama-shi Kanagawa 244-8510 (JP)
(74) Representative: Lamb, Martin John Carstairs
(86) International application number: PCT/JP2011/070697
(87) International publication number: WO 2012/043206

(57) **Abstract**

A process for manufacturing a laminated glass including an intermediate film containing EVA as a main component is provided. In the process, the laminated glass is manufactured through a step wherein a pressure is applied to a laminate by nip rolls. By the process, bubble formation in the laminated glass can be satisfactorily prevented. The process for manufacturing the laminated glass is characterized by including a step for preparing a laminate 20 containing an intermediate film 12 having at least one ethylene-vinyl acetate copolymer layer including ethylene-vinyl acetate copolymer and a crosslinking agent, having a melt viscosity at 70°C of 2 × 10⁵Pa · s or less, an arithmetic mean estimation Ra (JIS-B0601(2001)) of at least on one surface in the range of 5 to 20 µ m, and a mean thickness of 0.5 mm or more, and at least two glass plates, the intermediate film interposed between the at least two glass plates; a step for compacting the laminate 20 by being pressurized by nip rolls 34 after being heated; and a step for integrating the laminate by crosslinking by heating after the step for compacting the laminate.

## Description

### Field of the invention

The present invention relates to a process for manufacturing a laminated glass comprising an intermediate film containing, as a main component, an ethylene-vinyl acetate copolymer, particularly a process for manufacturing the laminated glass comprising a preliminary compacting step wherein the laminate is pressurized by nip rolls.

### Description of the Related Art

Hitherto, laminated glasses are widely used as window glasses for vehicles such as automobiles and airplanes, and buildings. Generally speaking, the laminate glass comprises two transparent substrates such as glass plates, and an intermediate film interposed therebetween. The lamented glass has properties such as penetration resistance and shatterproof property when glasses are broken.

As the intermediate film for the laminate glasses, transparent resin films such as those including, as a main component, an ethylene-vinyl acetate copolymer (hereinafter, also referred to as EVA) (hereinafter, also referred to as EVA-based intermediate film) or polyvinyl butyral (hereinafter, also referred to as PVB)(hereinafter, also referred to as PVB-based intermediate film) are used, with properties such as adhesive property with respect to glass plate or the like, strength and transparency taken into account. In particular, the EVA-based intermediate film is and useful in view of low-price, excellent water resistance, adhesive property, penetration resistance and transparency. Moreover, the properties such as the adhesive property, penetration resistance and durability of the EVA-based intermediate film can be further improved by crosslinking the copolymer by using a crosslinking agent such as an organic peroxide.

For laminating two glass plates and an intermediate film in the course of production of the laminated glass, it is necessary that the air existing at interfaces between the intermediate film and the glass plates is evacuated not to generate bubbles. This is because laminated glasses including bubbles therein may have poor external appearance.

Accordingly, as a process for manufacturing a laminated glass, for instance, either of the following methods is used;
(1) A laminate, which comprises an intermediate film interposed between glass plates, is introduced to a vacuum bag, degassed and subjected to preliminary compaction under heating, to evacuate air existing in the intermediate film or at the interfaces between the intermediate film and the glass plates to retain a small amount of bubbles. Thereafter, the bubbles are completely removed from the laminate, by main heat and pressure application in a vessel at a high temperature and a high pressure.
(2) A laminate, which comprises an intermediate film interposed between glass plates, is heated by being transported through a heating zone. Subsequently, a preliminary compaction is carried out wherein the laminate is caught by nip rolls, to squeeze air out of the interfaces between the intermediate film and the glass plates. Thereafter, the main heat and pressure application is carried out in a vessel at a high temperature and a high pressure.

In general, the above method (2) where nip rolls are used is advantageous because the preliminary compaction step is performed continuously. Method (2) is a usually used method for a laminated glass containing a PVB-based intermediate film. When the EVA-based intermediate film is used in a laminate, however, there are some limitations. For example, the greater the thickness of the intermediate film, the more difficult the removal of the bubbles. Therefore, method (1) where the vacuum bag is used for preliminary compaction step is mainly used for preparing a laminate glass including the EVA-based intermediate film.

Patent Document 1 discloses a method for manufacturing a laminated glass. In the Document, a plastic sheet (corresponding to the intermediate film), which has an embossed surface with a predetermined arithmetical mean deviation of profile Ra and a predetermined threads per inch Pc, is interposed between two glass plates, heated under a predetermined condition, and pressurized by using nip rolls. Thereafter, a secondary heating is carried out under a predetermined condition. By this method, a laminated glass without including bubbles is efficiently obtained. Moreover, in Patent Document 2, a method for continuously manufacturing a laminated glass is disclosed. By this method, the process for preparing the laminated glass is streamlined. In the document, an intermediate film with a predetermined range of thicknesses is used, which comprises a resin with predetermined viscoelastic properties. The intermediate layer is brought into a pressure contact with nip rolls.

### Prior Art Documents

### Patent Documents

Patent Document 1: JP-A 10(1998)-167773
Patent Document 2: JP-A11(1999)-209150

### Disclosure of the Invention

### Problem to be solved by the Invention

The pressuring step by using the above-mentioned nip rolls are effective when predetermined resin materials as discussed in Patent Documents 1 and 2 are used for intermediate film. On the other hand, it is difficult to apply the pressuring step to the EVA-based intermediate film.

It is therefore an object of the present invention to provide a method for manufacturing a laminate glass comprising an intermediate film including EVA as a main component, by using a compacting step by using nip rools, whereby bubbles in the laminated glass are effectively removed.

### Means for Solving Problem

The inventors of the present invention variously studied on the factors which make it difficult to remove bubbles formed at interfaces between the glass plates and the intermediate film in the laminated glass when the laminate is compacted by nip rolls, in the preparation of the laminated glass comprising the EVA-based intermediate film. It was found that bubbles in the laminated glass can be effectively removed by focusing on and regulating the flowability of the intermediate film (material) and the surface properties thereof, when a laminated glass is produced which comprises the EVA-based intermediate film by compacting the laminate by using nip rolls.

The above-mentioned object of the present invention is achieved by a method for manufacturing a laminated glass comprising:
a step for preparing a laminate; comprising:
   an intermediate film comprising at least one ethylene-vinyl acetate copolymer layer including ethylene-vinyl acetate copolymer and a crosslinking agent, having a melt viscosity at 70° C of 2 × 10⁵Pa • s or less, an arithmetic mean estimation Ra (JIS-B0601(2001)) of at least on one surface in the range of 5 to 20 µ m, and a mean thickness of 0.5 mm or more, and at least two glass plates, the intermediate film interposed between the at least two glass plates; a step for compacting the laminate by nip rolls after being heated; and a step for integrating the laminate by crosslinking by heating after the step for compacting the laminate.

By determining the melt viscosity of EVA at 70° C as discussed above, the flowability of the intermediate film in the compacting step is improved. Therefore, the EVA layer is adhered to the glass plates to have uniform interfaces between the EVA layer and the glass plates. Moreover, at least one surface of the intermediate film can be prepared to have surface properties including an arithmetic mean estimation Ra in the in the above-mentioned range. Accordingly, the air between the intermediate film and the glass plates moves smoothly, when the laminate is pressed by nip rolls. Hence, the air is easily removed, and the bubble formation can be prevented. When the arithmetic mean estimation Ra is less than 5 µ m or more than 20 µ m, air can remain at interfaces between the intermediate film and the glass plates. Here, it is preferable that both surfaces of the intermediate film have the arithmetic mean estimation Ra in the above discussed range. Moreover, when a single EVA layer included in the intermediate film has the above mentioned mean thickness, stress relaxation effect is obtained. Based on this effect, it is made possible to apply pressure sufficiently to the laminate by nip rolls, without breaking the glass plates. As a result, bubbles between the intermediate film and the glass plates are sufficiently removed therefrom.

The process for manufacturing the laminated glass of the present invention has preferable embodiments as follows:

(1) The ethylene-vinyl acetate copolymer layer has a melt viscosity at 70°C in the range of 1 × 10⁴Pa · s to 2 × 10⁵Pa · s. When the flow rate of the intermediate film is excessively high, it is possible that an intermediate film is bulged out of the glass plates. Therefore, the above range is preferred.
(2) The ethylene-vinyl acetate copolymer layer has ethylene-vinyl acetate copolymer with a melt flow rate (JIS-K7210) of 4g110 min or more. By this embodiment, the melt viscosity of the EVA layer at 70°C can be easily controlled as discussed previously.
(3) The ethylene-vinyl acetate copolymer layer has a mean thickness in the range of 0.5 to 2.0 mm. When the thickness of the intermediate film is too large, it is possible that the intermediate film is bulged out of the glass plates. Therefore, the above range is preferred.
(4) The intermediate film has a multi-layered structure comprising two or more of the above-mentioned ethylene-vinyl acetate copolymer layer.
(5) The intermediate film has a multi-layered structure comprising two or more of the above-mentioned ethylene-vinyl acetate copolymer layer, and at least one transparent plastic film is interposed between the two or more of the above-mentioned ethylene-vinyl acetate copolymer layer.
Based on this structure, the thickness of the intermediate film can be easily increased with the thickness and the shape thereof satisfactorily maintained.
(6) The transparent plastic film is a polyethylene terephthalate film (hereinafter, also referred to as PET). PET is appropriately used because of excellent resistance against heat application or the like, and high transparency.
(7) The step for compacting a laminate is carried out by introducing the laminate to a heating furnace in the course of transportation, and subsequently pressurizing the laminate by a pair of nip rolls.
(8) The intermediate film is heated to a temperature in the range of 62 to 80°C prior to the pressure application by using the pair of nip rolls in the step for compacting a laminate.
(9) In the step for compacting the laminate, the heating is carried out accordance with infrared heating. By directly and uniformly heating the intermediate film, the EVA layer is readily fused uniformly. Therefore, the EVA layer is adhered to the glass plates so as to have uniform interfaces between the EVA layer and the glass plates.
(10) The linear load, which is applied to the laminate by the nip rolls in the step for compacting the laminate, is in the range of 5 to 100 kN/m.

### Effect of the Invention

The process for manufacturing the laminated glass of the present invention comprises a step wherein the laminated glass having the EVA-based intermediate film as mentioned above is produced by pressurizing the laminate by use of nip rolls. In such process, by the use of the above-mentioned EVA-based intermediate film, bubbles formed at the interfaces between the intermediate film and the glass plates can be sufficiently removed. Therefore, the laminated glass comprising EVA-based layer in the intermediate film can be effectively produced by continuously performing preliminary compacting step without having poor external appearance to have a good yield.

### Brief Description of the Drawings

[Fig. 1] Fig. 1 is a schematic cross section for explaining an exemplary embodiment of a process for manufacturing a laminated glass of the present invention.
[Fig. 2] Fig. 2 is a schematic cross section for explaining a preferred embodiment of an intermediate film for use in a method for preparing a laminated glass of the present invention.

### Mode for Carrying out the Invention

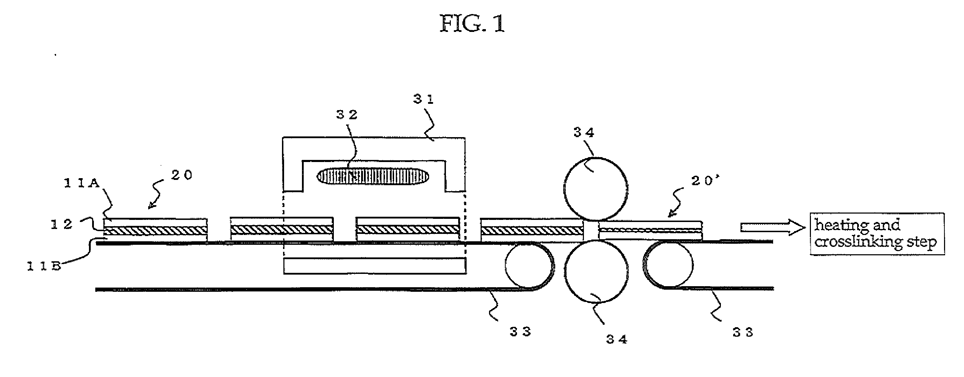

A process for preparing a laminated glass of the present invention will now be explained by referring to the drawings. Fig. 1 is a schematic cross section for explaining an exemplary embodiment of a process for manufacturing a laminated glass of the present invention. In Fig. 1, the laminated glass is prepared by preparing a laminate 20 comprising a intermediate film 12 interposed between two glass plates 11A and 11B, subjecting the laminate to a preliminary compaction with application of heat and pressure thereto, and then crosslinking the same with application of heat thereto.

As the glass plates 11A and 11B in the process for manufacturing the laminated glass of the invention, it is possible to use any transparent glass plates, for example, green glass plates, silicate glass plates, inorganic glass plates, and uncolored transparent glass plates. Alternatively, plastic substrate plates or films made of plastics such as polyethylene terephthalate (PET), polyethylene naphthalate (PEN), polyethylene butyrate, polymethylmethacrylate (PMMA) can be used for the glass plates. In view of heat resistance, weather resistance and impact resistance, the glass plates are preferably used. In general, the glass plate has a thickness in the range of about 1 to 20 mm. The glass plates 11A and 11B can be the same with each other, or different substrate materials can be used therefor. The combination of the glass plates 11A and 11B is determined with the strength of the substrate material and the usage of the laminated glass taken into account.

The intermediate film 12 used for the method for preparing the laminated glass of the invention comprises one or more EVA layer comprising a composition including EVA and a crosslinking agent. In Fig. 1, the EVA layer as the intermediate film is described as a single layer. Alternatively it is preferable that the intermediate film 12 has a multi-layered structure which comprises two or more EVA layers.

The physical properties of the EVA layer are as follows:
The EVA layer has a melt viscosity at 70°C of 2 × 10⁵Pa · s or less. With this property, the flowaility of the intermediate film 12 can be increased in the step for compacting the laminate by nip rolls, which will be explained later. Further, with the above property, the EVA layer is adhered to the glass plates to have uniform interfaces between the EVA layer and the glass plates. When the flowability of the EVA layer is excessively large, EVA layer may be bulged out of the glass plates 11A and 11B. For avoiding that, it is preferable that the melt viscosity of the EVA layer at 70°C is in the range of 1 × 10⁴Pa · s to 2 × 10⁵Pa · s, and more preferably in the range of 2 × 10⁵Pa · s to 2 × 10⁵Pa · s. Herein, the melt viscosity of the EVA layer was measured under a predetermined shear velocity of 0.1 mm/min by use of a capilograph.

Moreover, at least one surface of the EVA layer has an arithmetic mean estimation Ra in the range of 5 to 20 µ m. With this property, the air existing at interfaces between the intermediate film 12 and the glass plates 11A and 11B moves smoothly, and the air can be easily removed therefrom. Thus, the bubble formation is prevented. When the arithmetic mean estimation Ra is less than 5 µ m, air passage may be too small, and while when Ra is more than 20 µ m, large bubbles may generate, resulting air at the interfaces between the intermediate film and the glass plates. It is preferable that the arithmetic mean estimation Ra of the surface of the EVA layer is in the range of 5 to 15 µ m, more preferably in the range of 7 to 13 µ m. It is preferable that both surfaces of the intermediate film 12 have an arithmetic mean estimation Ra in the above-mentioned range. The surface property discussed above can be obtained by embossing the surface of the EVA layer to give the surface roughness pattern. There are no specific restrictions to the surface roughness pattern as long as the arithmetic mean estimation Ra is in the above-mentioned range. For instance, it is possible to provide a surface roughness pattern wherein a convex part is in the form a circle, a semicircle, a polygon, or the like.

In the present invention, the arithmetic mean estimation Ra is a value measured in accordance with JIS-B0601(2001). More precisely, the value Ra is obtained by sampling a part of the surface in the direction of the average line of the roughness curve, and then summing the deviations, as the absolute values, i.e. lengths from the average line to the measured curve on the sample and averaging the same.

Moreover, the mean thickness of the EVA layer is 0.5 mm or more. Accordingly, the stress relaxation effect is obtained in the process for compacting the laminate by using the nip rolls, which will be explained later. Based on the stress relaxation effect, it is made possible to apply pressure sufficiently to the laminate by nip rolls, without breaking the glass plates. As a result, bubbles between the intermediate film and the glass plates can be satisfactorily removed. When the mean thickness of the EVA layer is excessively large, it is possible that the intermediate film is bulged from the glass plates 11A and 11B. For avoiding this, it is preferable that the EVA layer has a mean thickness in the range of 0.5 to 20 mm, and more preferably in the range of 0.5 to 1.2 mm. The mean thickness of the EVA film is defined as an average of the values obtained by measuring the thickness of the EVA film at 10 or more parts by using a micrometer.

In the process for preparing a laminated glass of the present invention, as shown in Fig. 1, an intermediate film 13 including the EVA layer as discussed above is interposed between two glass plates 11A and 11B to prepare a laminate 20. The laminate is introducing to a heating furnace 31 in the course of transportation by means of a transportation unit 33. The heating furnace 31 is provided with a heating unit 32 can heat the intermediate film 12 to a predetermined temperature, during the laminate 20 being transported in the heating furnace 31. Thereafter, the laminate 20 was introduced to the nip of nip rolls 34 which are composed of opposing two rollers, i.e, a pair of rollers. The nip rolls 34 are an apparatus for continuously pressurizing a subject which is introduced and comes out of the rolls with application of predetermined linear load thereto. By the apparatus, the laminate 20 is pressurized, and the intermediate film 12 is brought into pressure contact with the glass plates 11A and 11B. In the pressure application, the pressure is satisfactorily applied to the laminate without breaking the glass since the EVA layer in the intermediate film 12 has the above-mentioned physical properties. Moreover, based on the physical properties, the EVA layer is adhered to the glass plates to have uniform interfaces between the EVA layer and the glass plates. Accordingly, the air between the intermediate film and the glass plates can be easily removed, and the bubbles are not easily generated.

Known apparatuses are used as the transportation unit 33, the heating furnace 31, and the nip rolls 34. Any heating systems including the infrared heating and hot air are applicable to the heating unit 32 in the heating furnace 31. In place of the heating furnace 31, it is possible to use a heating unit with a heating roller system. It is preferable to use the infrared heating system by which the intermediate film 12 can be directly and uniformly heated. Accordingly, the heating temperature to the intermediate film 12 is easily controlled, the EVA layer is readily fused uniformly, and hence the EVA layer is uniformly adhered to the glass plates in the course of the pressure application by nip rolls. There is no limitation to the heating temperature as long as the crosslinking agent, which is contained in the EVA layer in the intermediate film, does not react. With the flowability of the intermediate film 12 and the stress relaxation effect thereof under pressure are taken into account, it is preferable that the intermediate film 12 has a temperature in the range of 62 to 80°C, more preferably in the range of 68 to 78°C before the laminate is pressed by nip rolls.

The nip rolls 34 are not limited and may be a plurality of pairs of nip rolls. For avoiding temperature decrease under pressure application, it is possible to use nip rolls composed of heating rollers. The linear load for the pressure application by the nip rolls 34 is preferably in the range of 5 to 100 kN/m, and more preferably in the range of 10 to 50 kN/m, although there is no special limitation to the linear load.

After the compression step, another step (heating and crosslinking step) is carried out wherein the preliminarily compressed laminate 20' is heated, and crosslinked to make the constituent layers integral with each other. Thus, a laminate glass is obtained. Known methods are used for the heating and crosslinking step. For example, a high-temperature high-pressure treatment by an equipment such as an autoclave can be used. There is no limitation to the heating condition, and is controlled depending on the formulation, e.g., the amount of a crosslinking agent in the EVA layer, which will be described later. Usually, the heat application is carried out at a temperature in the range of 100 to 150°C (particularly at about 130°C), for 10 min to one hour. The heat is applied to the laminate preferably with application of pressure thereto in the range of 1.0 × 10³ Pa to 5.0 × 10⁷Pa. Here, the laminate after crosslinking is cooled generally at room temperature. However, the higher the cooling rate, the better.

The intermediate film for use in the laminated glass of the invention will now be explained in detail.

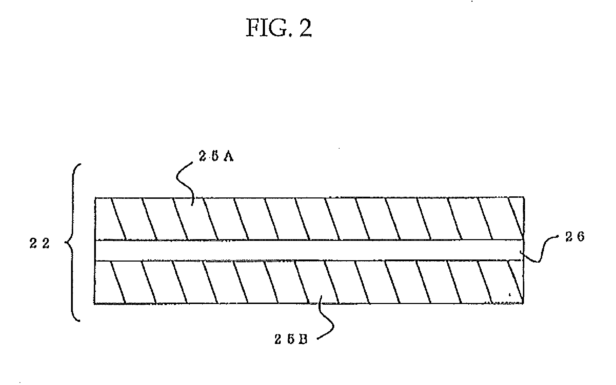

Fig. 2 is a schematic cross section for explaining a preferred embodiment of an intermediate film used for the method for preparing the laminated glass of the invention.

In Fig. 2, the intermediate film 22 has a multi-layered structure including a transparent plastic film 26 interposed between two EVA layers 25A and 25B. By this structure, the thickness of the intermediate film is easily increased. It is possible to omit the transparent plastic film 26, and the layer thickness is easily increased even in a multi-layered structure composed only of the EVA layers 25A and 25B. In the present invention, if the intermediate film may have a multi-layered structure having a increased film thickness, it is possible to have a dimensional stability decreased. For maintaining the dimension, it is further preferable to use a multi-layered intermediate film 22 including a transparent plastic film 26 interposed between EVA layers 25A and 25B. In Fig. 2. the intermediate film 22 has two EVA layers, but increased number of the EVA layers can be superimposed to have a multi-layered structure. The number of the layers is preferably in the range of 2 to 4. If the number of the layer is excessively large, the layers tend to displace/shift from each other, and the amount of the air included in the layers is to be increased. Namely, in such case, it may be difficult to remove bubbles in the above-mentioned compacting step. When the EVA layer is used as the intermediate layer in the multi-layered structure having 3 or more layers, it is possible to include a plurality of transparent plastic films interposed between the EVA layers.

As the transparent plastic film 26, any transparent ("transparent to visible light") plastic films can be used without any restrictions. Examples of the plastic films are polyethylene terephthalate (PET) film, polyethylene naphthalate (PEN) film and polyethylene butyrate film. Preferred is PET film in view of excellent resistance to heat application or the like, and high transparency. The thickness of the plastic film is preferably in the range of 10 to 400 µ m, particularly in the range of 20 to 200 µm.

The materials for the composition constituting the EVA layer in the intermediate film, which is used in the manufacturing process of the invention, will be explained in detail below.

### [Ethylene-vinyl acetate copolymer]

EVA for use in the present invention is not especially limited as long as the EVA layer can be prepared having the previously discussed melt viscosity at 70°C. The content of vinyl acetate in EVA is preferably in the range of 23 to 38 % by weight, based on EVA. EVA resin tends to be hard, as the content of vinyl acetate unit is decreased. If the vinyl acetate unit is less than 23 % by weight, the transparency of the intermediate film may not be satisfactory when cured by crosslinking at a high temperature. If the content of vinyl acetate unit is more than 38 % by weight, the thickness of the intermediate film can be insufficient for necessary impact resistance and penetration resistance. It is further preferable that the content of the vinyl acetate in EVA is in the range of 25 to 30% by weight, and particularly preferably in the range of 26 to 28% by weight. Moreover, it is preferable that EVA has a melt flow rate (MFR) (in accordance with JIS-K7210) of 4g/10 min or more. Based on this, the melt viscosity of EVA layer at 70°C can be easily adjusted as mentioned above, More preferably, the MFR is in the range of 4.0 to 30.0 g/10 min, particularly in the range of 8.0 to 18.0 g/10 min. Here, the MFR is measured at 190°C under load application of 21.18 N.

### [Crosslinking agent]

The crosslinking agent used in the present invention is capable of forming a EVA crosslinked structure, and increasing the adhesive property of the EVA layer.

As the crosslinking agent, organic peroxides are preferably used. Any organic peroxides can be used which decompose at 100°C or more to generate radicals. The organic peroxide is selected in the consideration of film-forming temperature, condition for preparing the composition, curing temperature, heat resistance of material(s) to be cured, and storage stability. Especially, preferred are those having a decomposition temperature at which they have half-lives of 10 hours of 70°C or more.

From the viewpoint of resin processing temperature and storage stability, examples of the preferable organic peroxide include hydroperoxide-based compound, dialkyl peroxide-based compound, and ketone peroxide-based compounds. These may be used alone or in combination with each other.

Examples of the hydroperoxide-based compound include P-mentane hydroperoxide, 1,1,3,3-teramethylbutyl hydroperoxide, cumene hydroperoxide, and t-hexyl hydroperoxide.

Examples of the dialkyl peroxide-based compound are 2,5-dimethyl-2,5-di(2-ethylhexanoylperoxy)hexane, 3-di-t-butylperoxide, t-butyl-α-cumyl peroxide, di-α-cumyl peroxide, 1,4-bis((t-butyldioxy)isopropyl)benzene, 1,3-bis((t-butyldioxy)isopropyl) benzene, 2,5-dimethyl-2,5-bis(t-butylperoxy)benzene, 2,5-dimethyl-2,5-bis(t-butylperoxy)hexine, α,α'-bis(tert-butyloxyisopropyl)benzene, n-butyl-4,4-bis(t-butylperoxy)butane, 2,2-bis(tert-butylperoxy)butane, and 1,1-bis(tert-butylperoxy) 3,3,5-trimethylcyclohexane.

Examples of the ketone peroxide-based compound are methyl ethyl ketone peroxide, methyl isobutyl ketone peroxide, cyclohexanone peroxide, and methycyclohexane peroxide.

Of these, dialkyl peroxide-based compounds, in particular 2,5-dimethyl-2,5-di(2-ethylhexanoylperoxy)hexane is preferably used, for obtaining a cured film having an excellent adhesive property, heat resistance and ultraviolet resistance.

The content of the crosslinking agent in the composition for preparing the EVA layer is, in general, in the range of 0.5 to 5.0 parts by weight, preferably in the range of 0.5 to 2.5 parts by weight, and more preferably in the range of 0.65 to 2.5 parts by weight, based on 100 parts by weight of EVA. By using the organic peroxide in the above-mentioned content, a strong crosslinked structure is obtained, wherein the intermediate film(s) and the glass plates are made integral sufficiently with each other by crosslinking.

### [Crosslinking agent]

In the present invention, the composition for preparing the EVA layer may further include a crosslinking agent, if necessary. By use of the crosslinking agent, the gel fraction of the EVA is increased, and the adhesive property and the durability of the EVA film are improved.

The content of the crosslinking agent is, in general, 10 parts by weight or less, preferably in the range of 0.1 to 5 parts by weight, and more preferably in the range of 0.1 to 2,5 parts by weight. Therefore, an EVA film with an excellent adhesive property can be obtained.

Examples of the crosslinking auxiliary (compounds having a radical polymerizable group as functional group) include trifunctional crosslinking auxiliaries such as triallyl cyanurate and triallyl isocyanurate, monofunctional or bifunctional crosslinking auxiliaries such as (meth)acryl esters (e.g., NK Ester, etc.). Triallyl cyanurate and triallyl isocyanurate are preferred, and triallyl isocyanurate is particularly preferred.

### [Adhesion improver]

The composition for preparing the EVA layer in the present invention can further contain an adhesion improver for imparting a further improved adhesion property to the composition. As the adhesion improver, a silane coupling agent can be used, Examples of the silane coupling agent include γ-chloropropylmethoxysilane, vinyltriethoxysilane, vinyltris(β-methoxyethoxy)silane, γ-methacryloxypropylmethoxysilane, vinyltriacetoxysilane, γ-glycidoxypropyltrimethoxysilane, γ-glycidoxypropyltriethoxysilane, β-(3,4-epoxycyclohexyl) ethyltrimethoxysilane, vinyltrichlorosilane, γ-mercaptopropylmethoxysilane, γ-aminopropyltriethoxysilane, N-β-(aminoethyl)-γ-aminopropyltrimethoxysilane. The silane coupling agents can be used alone, or in combination of two or more kinds. Among these, γ-methacryloxypropylmethoxysilane is particularly preferably used.

The content of the silane coupling agent is preferably in the range of 0.1 to 2 parts by weight, further preferably in the range of 0.1 to 0.65 parts by weight, an particularly preferably in the range of 0.1 to 0.4 parts by weight.

### [Others]

The EVA composition for preparing the EVA layer of the invention may further contains, if necessary, various additives such as plasticizers, and acryloxy group-containing compounds, methacryloxy group-containing compounds and/or epoxy group-containing compounds for improvement or adjustment of various properties of the resultant EVA film (e.g., mechanical strength, optical characteristics such as transparency, heat resistance, light-resistance, and crosslinking rate).

The plasticizer is not especially limited, but polybasic acid esters and polyhydric alcohol esters are generally employed. Examples of the esters include dioctyl phthalate, dihexyl adipate, triethylene glycol-di-2-ethylbutylate, butyl sebacate, tetraethylene glycol heptanoate and triethylene glycol dipelargonate. The plasticizer can be used alone, or in combination of two or more kinds. The content of the plasticizer is generally 5 parts by weight or less, based on 100 parts by weight of EVA.

Examples of the acryloxy and methacryloxy group-containing compounds are derivatives of acrylic acid or methacrylic acid, such as esters and amides of acrylic acid or methacrylic acid. Examples of the ester residue include linear alkyl groups such as methyl, ethyl, dodecyl, stearyl and lauryl, a cyclohexyl group, a tetrahydrofurfuryl group, an aminoethyl group, a 2-hydroxyethyl group, a 3-hydroxypropyl group, 3-chloro-2-hydroxypropyl group. Example of the amide includes diacetone acrylamide. Further, examples of the esters include esters of acrylic acid or methacrylic acid with polyhydric alcohol such as ethylene glycol, triethylene glycol, polypropylene glycol, polyethylene glycol, trimethylol propane or pentaerythritol.

Examples of the epoxy group containing compounds include triglycidyl tris (2-hydroxyethyl)isocyanurate, neopentylglycol diglycidyl ether, 1,6-hexanediol diglycidyl ether, allyl glycidyl ether, 2-ethylhexyl glycidyl ether, phenyl glycidyl ether, phenol(ethyleneoxy)₅glycidyl ether, p-telt-butylphenyl glycidyl ether, diglycidyl adipate, diglycidyl phthalate, glycidyl methacrylate and butyl glycidyl ether.

The content of the acryloxy group-containing compounds, the methacryloxy group-containing compounds or the epoxy group-containing compounds is preferably used in the range of 0.5 to 5.0 parts by weight, especially 1.0 to 4.0 parts by weight based on 100 parts by weight of the EVA.

Moreover, the composition for preparing the EVA layer of the invention may contain an ultraviolet absorbent, a photostabilizer and an anti-aging agent. When the composition contains the ultraviolet absorbent, the EVA is prevented from the deterioration based on the effects of light irradiation, etc, and hence the EVA layer is prevented from yellowing. Examples of the ultraviolet absorbents include benzophenone-based ultraviolet absorbents such as 2-hydroxy-4-methoxybenzophenone, 2-hydroxy-4-n-dodecyloxybenzophenone, 2,4-dihydroxybenzophenone, 2,2'-dihydroxy-4-methoxybenzophenone, and 2-hydroxy-4-n-octoxybenzophenone, though the ultraviolet absorbents are not particularly restricted thereto. The content of the benzophenone-based ultraviolet absorbent is preferably in the range of 0.01 to 5 part by weight based on 100 parts by weight of the EVA.

In addition to the above, when the composition contains a photostabilizer, the EVA is prevented from deterioration based on the effect of light irradiation, and hence the EVA layer is protected from yellowing. The preferred is hindered amine photostabilizer. The examples include LA-52, LA-57, LA-62, LA-63, LA-63p, LA-67 and LA-68 (each manufactured by ADEKA Co., Ltd.), Tinuvin 744, Tinuvin 770, Tinuvin 765, Tinuvin 144, Tinuvin 622LD, and CHIMASSORB 944LD (each manufactured by Ciba Specialty Chemicals Co., Ltd.), and UV-3034 (each manufactured by B. F. Goodrich). The photostabilizer can be used alone, or in combination of two or more kinds. The content of the photostabilizer is preferably in the range of 0.01 to 5 part by weight based on 100 parts by weight of the EVA.

As the anti-aging agent, hindered phenol-based antioxidant such as N,N'-hexan-1,6-diyl-bis(3-(3,5-di-tert-butyl-4-hydroxyphenyl)propionamid e], phosphorus-based heat stabilizers, lactone-based heat stabilizers, vitamin E-based heat stabilizers and sulfur-based heat stabilizers can be used.

### [Preparation of Intermediate film]

For manufacturing the intermediate film for the laminated glass of the invention, the EVA layer for constituting the intermediate layer is firstly prepared. The EVA layer is prepared, for example, by a process including a step (a) for preparing an intermediate film by forming a composition comprising EVA and a crosslinking agent into a sheet, to obtain a molded article; and a step (b) for embossing at least one surface of the article having a surface properties with an arithmetic mean estimation Ra in the range of 5 to 20 µm.

In the step (a), the composition containing EVA, the crosslinking agent, and, if necessary, the other components as discussed above is formed/molded into a sheet by known methods such as an extrusion molding or a calendar molding (calendaring). The mixing of the composition is preferably carried out by kneading under heating at 40 to 90 °C, and in particular 60 to 80°C. The kneading can be performed by a known method using a super mixer (high speed fluidizing mixer), or a roll mill.

The temperature for molding the composition into a sheet is set to be a temperature under which the reaction does not or hardly occur. For example, a temperature in the range of 40 to 90°C, particularly in the range of 50 to 80°C is selected.

In step (b), a know method is used for obtaining the molded article in the form of a sheet having the above-mentioned surface properties. A surface roughness pattern can be applied to a predetermined surface of the molded article by pressing under heating an emboss roller, an emboss plate or the like having a reversed surface roughness pattern with respect to the surface roughness pattern to be obtained. Accordingly, an EVA layer for use in the present invention is prepared. Alternatively, an emboss roller or the like can be pressed to both surfaces of the molded article under heating, to have an EVA layer having both surfaces with the above-mentioned surface properties.

The thus obtained EVA layer can be used as a single intermediate film, or two or more of them can be superimposed to prepared a multi-layered intermediate film. Moreover, it is possible to prepare and use a multi-layered intermediate film including a transparent plastic film interposed between two or more EVA layers, as mentioned previously.

### Examples

The invention is illustrated in detail with reference to the following Examples.

### (Examples 1 to 14, Comparative Examples 1 to 10)

### 1. Preparation of Intermediate Film

Compositions having a formulation as described in Table 1 and Table 2 were used as raw materials, and subjected to calendaring. Thus, molded articles were prepared. The compositions were knead at 80°C for 15 minutes, the temperature of the calender rolls were set to be 80°C, and the processing rate was set to be 5 m/min. Thereafter, one surface of the molded article was embossed with mini emboss rolls. Accordingly, EVA layers (size: 1000 mm × 1000 mm) of Examples 1 to 14 and Comparative Examples 1 to 10, which have the surface thicknesses and the surface properties (arithmetic mean estimation Ra) as shown in Table 1 and Table 2 were obtained. Subsequently, EVA layers having the number of layers as shown in Tables 1 and 2 are superimposed on one another to prepare an intermediate film.

The viscosities of the EVA layers were measured by under application of a predetermined shear velocity of 0.1 mm/min thereto by use of a capilograph. The surface properties of the EVA layer (arithmetic mean estimation Ra) were measured in accordance with JIS-B0601(2001) by using a surface roughness meter (Surtronic 3+ manufactured by Rank Taylor Hobson). The measurement was carried out at 10 parts in the EVA layer, and the measured values were averaged. The condition for the measurement was: measurement distance: 7.5 cm, measurement rate 1 mm/s, cutoff wave length: 2.5 µm, standard wave length for long-wave length λ c : 2.5 mm, standard wave length for shott-wave length λ s ; 0.0025 mm.

### 2. Preparation of Laminated Glass

Each intermediate film was interposed between two glass plates (size: 1000 mm × 1000 mm, thickness: 3 mm), to prepare a laminate. The laminate was subjected to a preliminary compaction at the temperature and the nip roll-linear load as described in Tables 1 and 2, and then pressurizing in an autoclave at 130°C for 30 min. Thus, laminated glasses were prepared. The external appearance of the thus obtained laminated glasses was observed, and the condition of bubbles in the laminated glasses was evaluated. In the evaluation, "○" represents that the number of bubbles having a diameter of 1 mm or less which can be visually observed is zero, "Δ" represents that the number of the bubbles having a diameter of 1 mm or less is 1 to 9, and " × " represents that the number of the bubbles having a diameter of 1 mm or less is 10 or more, or the number of the bubbles having a diameter of more than 1 mm is 1 or more.

### 3. Evaluation results

The evaluation results are shown in Tables 1 and 2.

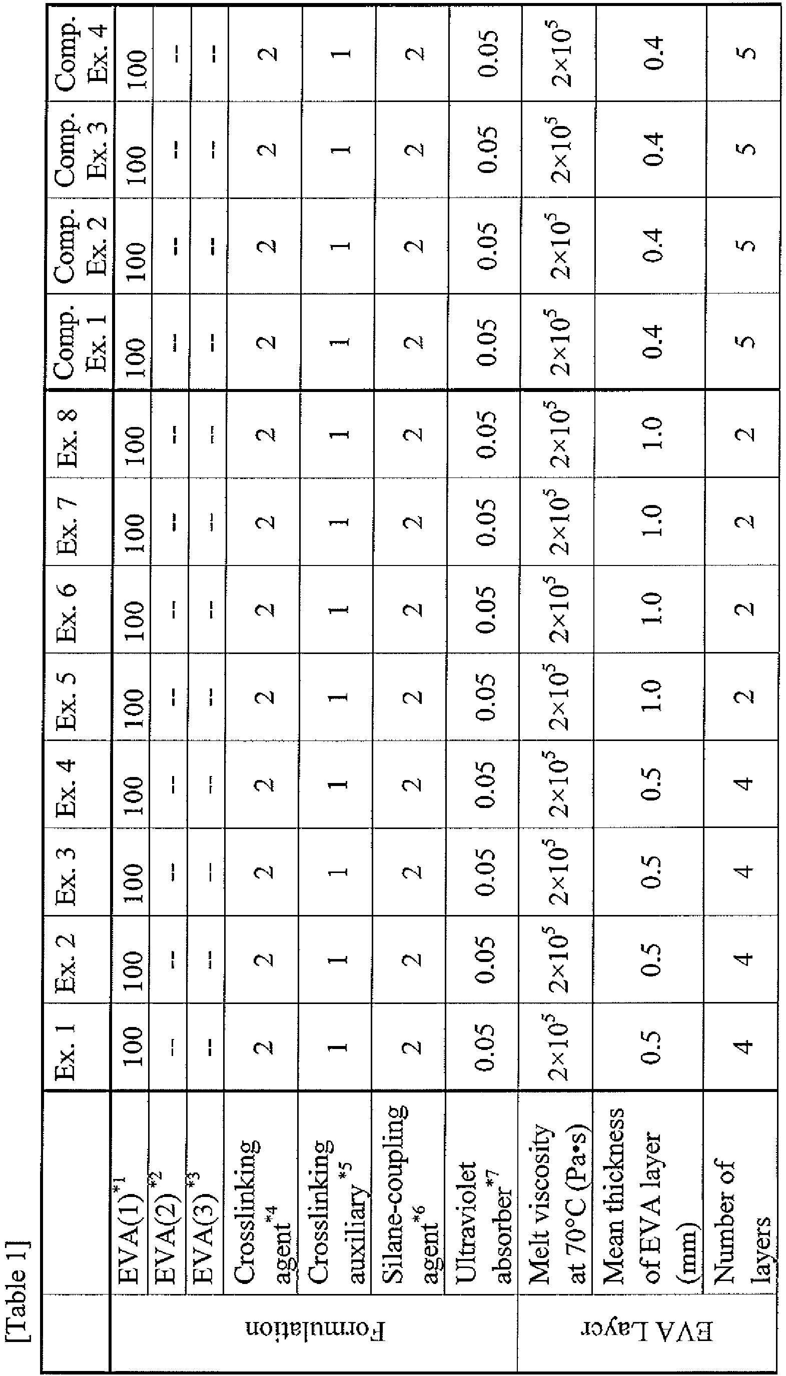

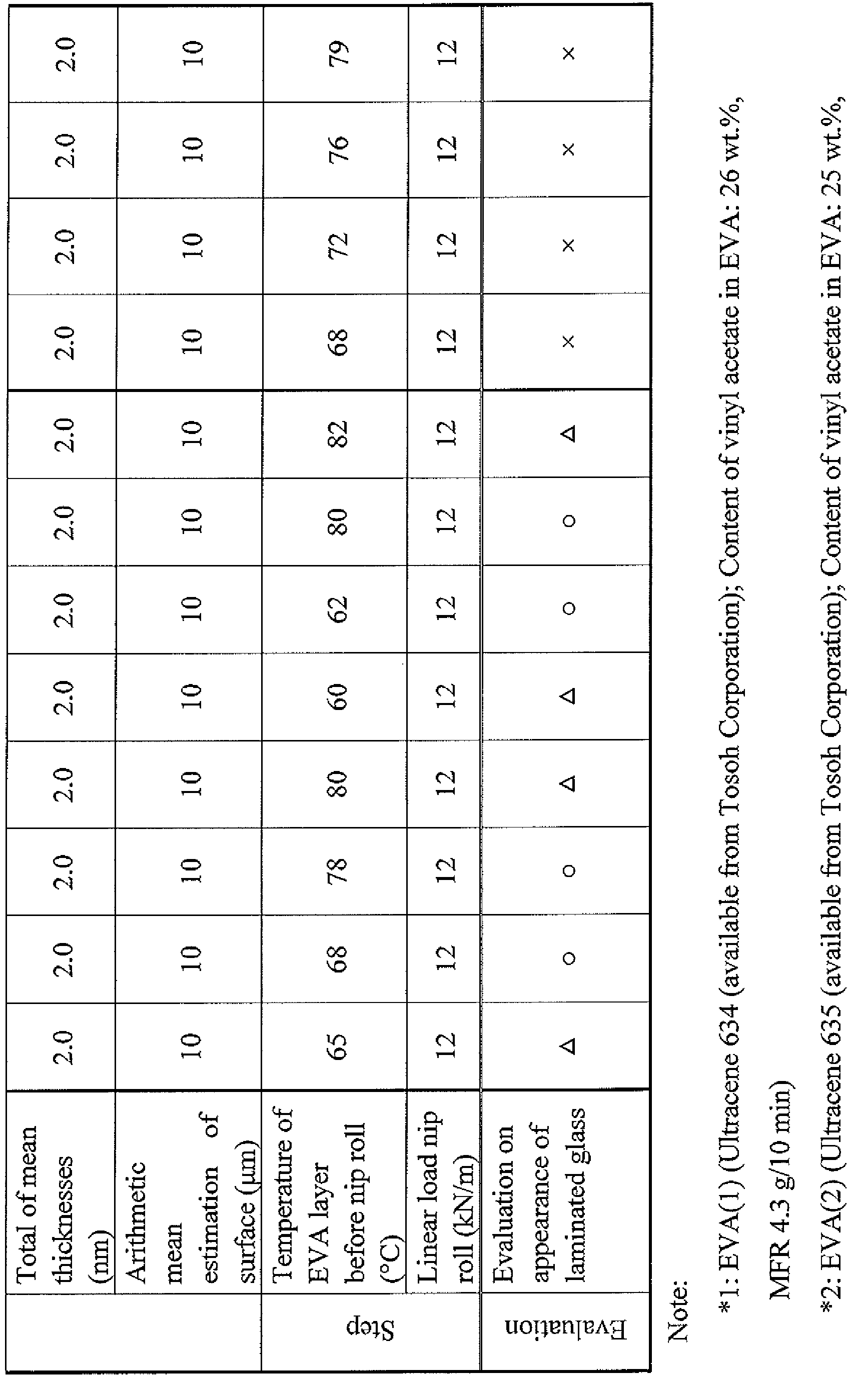

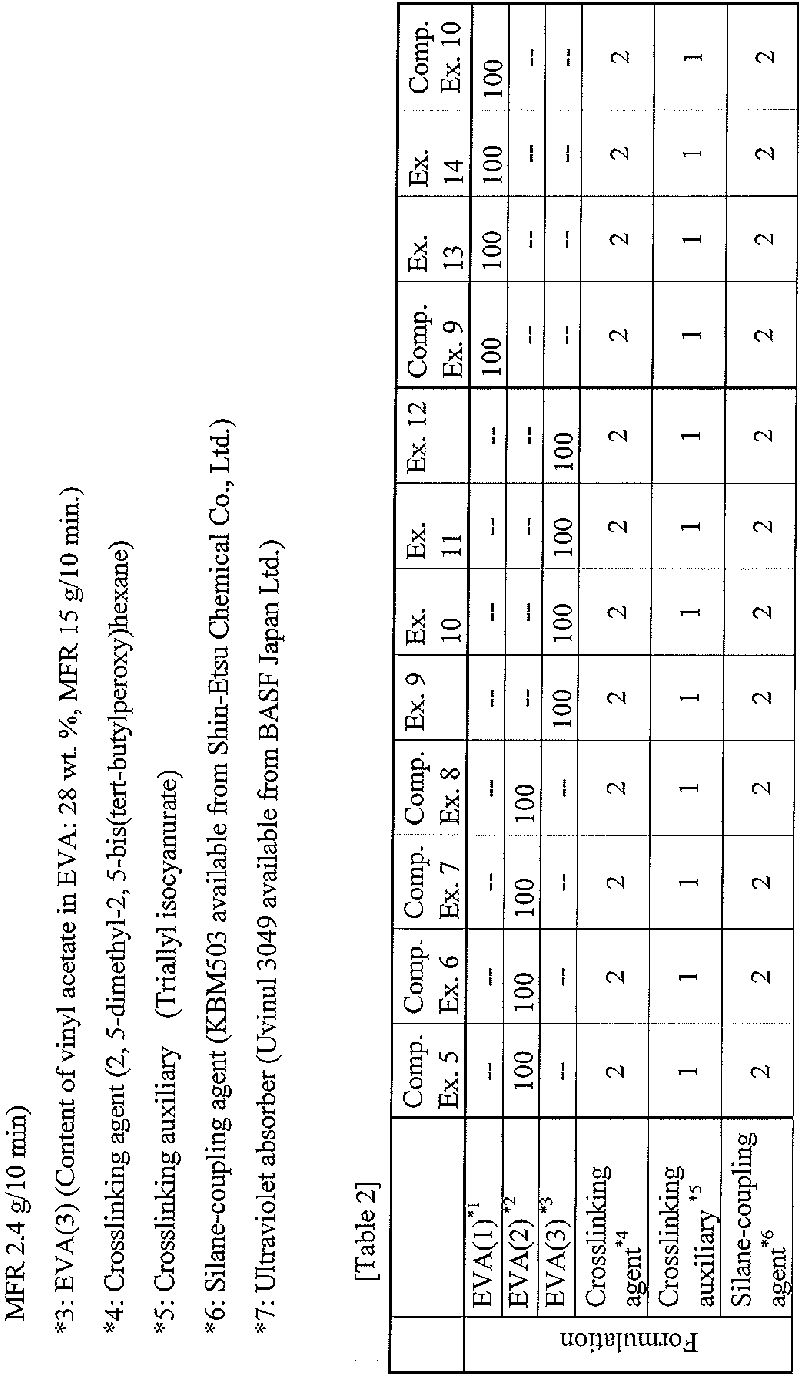

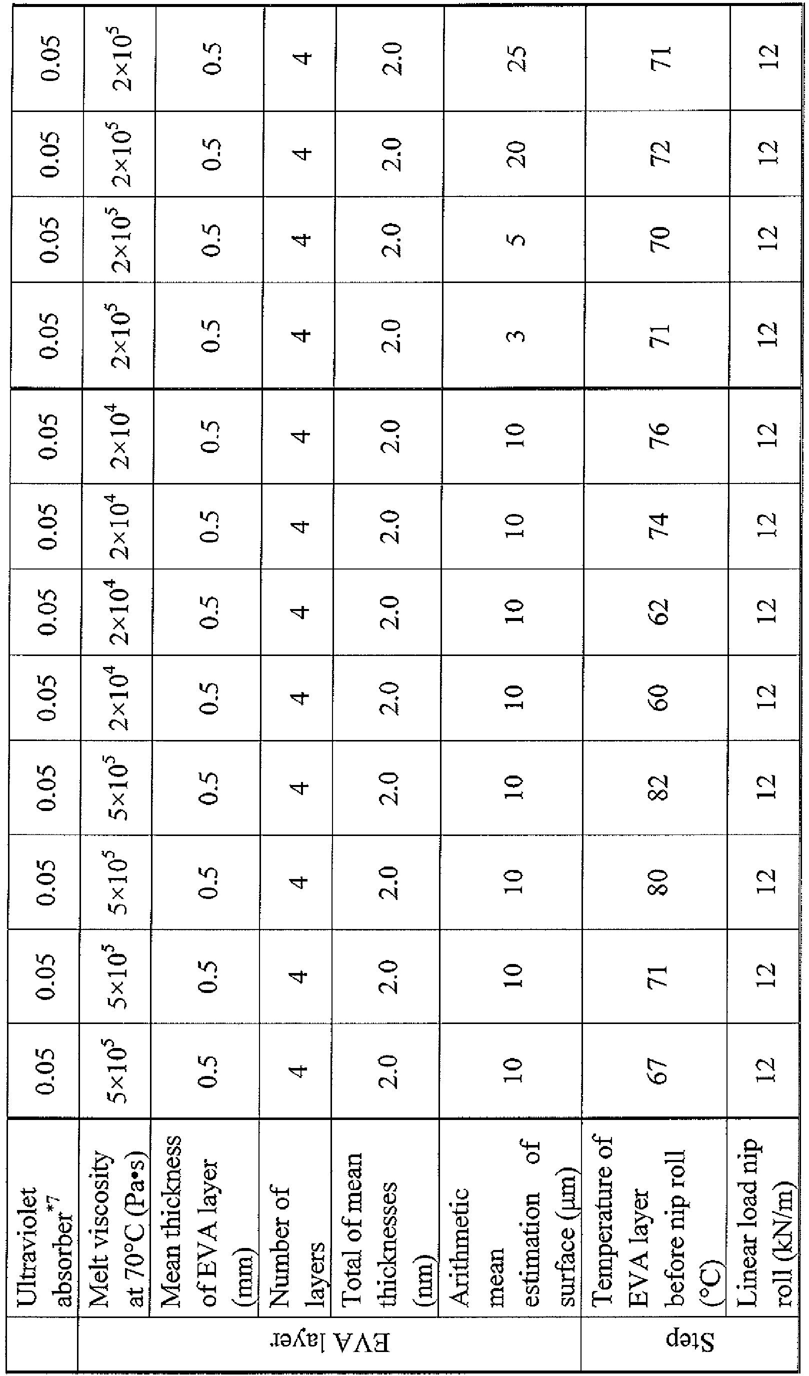

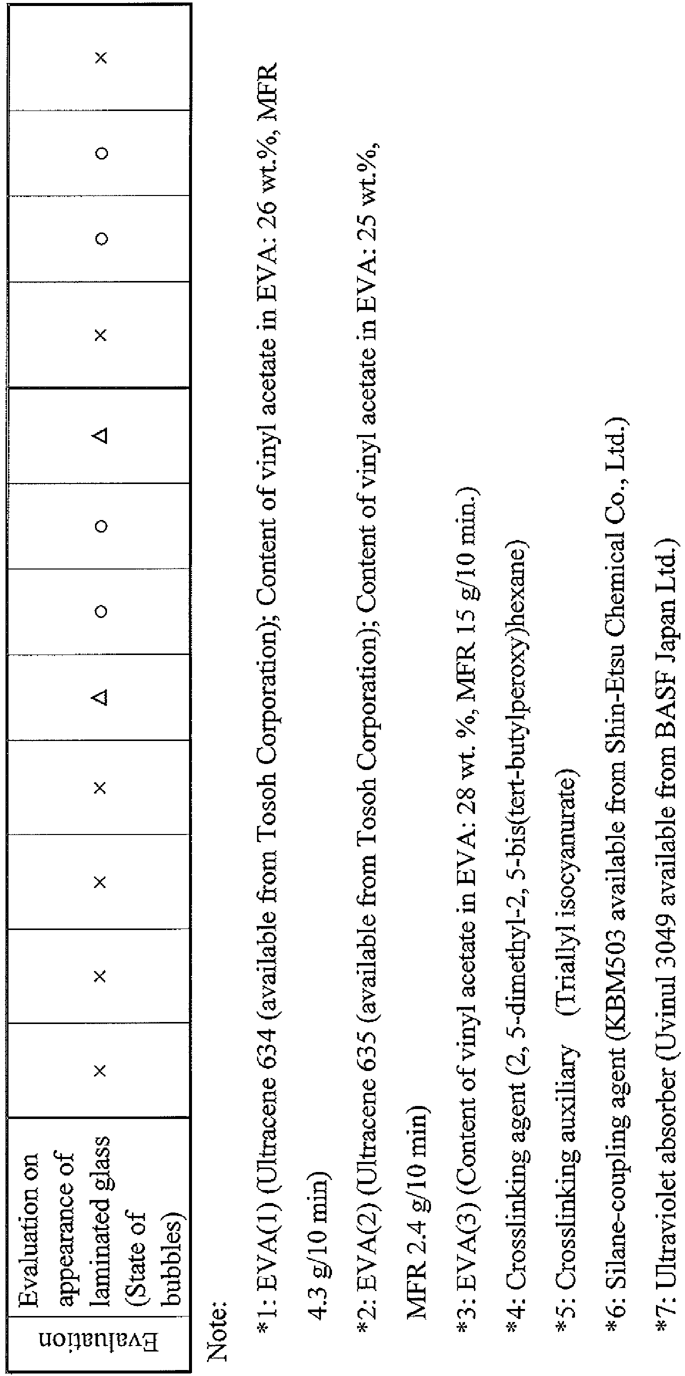

As shown in Table 1 and Table 2, laminated glasses having excellent external appearance were obtained, when the intermediate films comprising the ethylene-vinyl acetate copolymer layer having a melt viscosity at 70° C of 2 × 10⁵Pa · s or less, an arithmetic mean estimation Ra of one surface in the range of 5 to 20 µ m, and a mean thickness of 0.5 mm or more, by performing a step for compacting the laminate by nip rolls with heating the same.

### Industrial Utilization

According to the present invention, it is possible to provide a laminated glass including an EVA intermediate film with a high productivity. The laminated glass manufactured by the present invention can be is applicable to various usages, for examples, window glasses for buildings and vehicles (automobiles, railcars, and ships/boats), doors or walls for electronics such as plasma display and various apparatuses such as refrigerators and incubators.

### Explanations of letters or numerals

- 11A, 11B: Glass plates
- 12, 22: Intermediate films
- 20: Laminate
- 20': Laminate (after preliminary compaction)
- 25A, 25B: EVA layer
- 26: Transparent plastic film
- 31: Heating furnace
- 32: Heating unit
- 33: Transportation unit
- 34: Nip rolls

## Claims

1. A process for manufacturing a laminated glass comprising:
a step for preparing a laminate; comprising:
an intermediate film comprising at least one ethylene-vinyl acetate copolymer layer including ethylene-vinyl acetate copolymer and a crosslinking agent, having a melt viscosity at 70°C of 2 × 10⁵ Pa · s or less, an arithmetic mean estimation Ra (JIS-B0601(2001)) of at least on one surface in the range of 5 to 20µ m, and a mean thickness of 0.5 mm or more, and
at least two glass plates, the intermediate film interposed between the at least two glass plates;
a step for compacting by pressurizing the laminate by nip rolls after being heated; and
a step for integrating the laminate by crosslinking by heating after the step for compacting the laminate.

2. The process for manufacturing a laminated glass as claimed in Claim 1, wherein the at least one ethylene-vinyl acetate copolymer layer has a melt viscosity at 70°C in the range of 1 × 10⁴ Pa · s to 2 × 10⁵Pa · s .

3. The process for manufacturing a laminated glass as claimed in Claim 1 or 2, wherein ethylene-vinyl acetate copolymer has a melt flow rate (JIS-K7210) of 4g/10 min or more.

4. The process for manufacturing a laminated glass as claimed in any of Claims 1 to 3, wherein the at least one ethylene-vinyl acetate copolymer layer has a mean thickness in the range of 0.5 to 2.0 mm.

5. The process for manufacturing a laminated glass as claimed in any of Claims 1 to 4, wherein the intermediate film has a multi-layered structure comprising at least two ethylene-vinyl acetate copolymer layers.

6. The process for manufacturing a laminated glass as claimed in Claim 5, wherein the intermediate film has a multi-layered structure comprising at least two ethylene-vinyl acetate copolymer layer and at least one transparent plastic film interposed therebetween.

7. The process for manufacturing a laminated glass as claimed in Claim 6, wherein the transparent plastic film is a polyethylene terephthalate film.

8. The process for manufacturing a laminated glass as claimed in any of Claims 1 to 7, wherein the laminate is introduced to a heating furnace in the course of transportation, and subsequently pressurized by a pair of rollers as the nip rolls in the step for compacting a laminate.

9. The process for manufacturing a laminated glass as claimed in any of Claims 1 to 8, wherein the intermediate film is heated to a temperature in the range of 62 to 80° C prior to the pressure application by using the pair of nip rolls in the step for compacting a laminate.

10. The process for manufacturing a laminate glass as claimed in any of Claims 1 to 9, wherein the heating is performed by infrared heating.

11. The process for manufacturing a laminate glass as claimed in any of Claims 1 to 10, wherein a linear load in the range of 5 to 100 kN/m is applied to the laminate by the pair of rollers in the step for compacting the laminate.
